# EUROPEAN PATENT APPLICATION

(11) **EP 4 443 580 A1**
(43) Date of publication of application: **09.10.2024**
(21) Application number: 24165600.8
(22) Date of filing: 22.03.2024
(51) Int. Cl.: H01M 10/04, H01M 50/103, H01M 50/119, H01M 50/131, H01M 50/15, H01M 50/159, H01M 50/171, H01M 50/184, H01M 50/186, H01M 50/209, H01M 50/264, H01M 50/545, H01M 50/557, H01M 50/562

(54) **BATTERY PACK**

(30) Priority: 26.03.2023 KR 20230039407; 06.10.2023 KR 20230133686
(71) Applicant: Samsung SDI Co., Ltd., Yongin-si, Gyeonggi-do 17084 (KR)
(72) Inventor: Byun, Sangwon, 17084 Yongin-si, Gyeonggi-do (KR); Yu, Arum Amy, 17084 Yongin-si, Gyeonggi-do (KR); Hyun, Jangsuk, 17084 Yongin-si, Gyeonggi-do (KR); Jeong, Hyunki, 17084 Yongin-si, Gyeonggi-do (KR)
(74) Representative: Gulde & Partner

(57) **Abstract**

A battery pack including battery cells pressurized toward each other, in direct contact with each other, and electrically connected to each other. The battery cells are arranged in a first direction and each of the battery cells has an inverse polarity with respect to an adjacent battery cell. The battery cells may be electrically connected to each other without a bus bar, which reduces the number of components and thereby reduces costs.

## Description

### BACKGROUND

### 1. Field

One or more embodiments relate to a battery pack.

### 2. Description of the Related Art

A secondary battery is a battery that is recharged and discharged, unlike a primary battery that is not rechargeable. A low-capacity secondary battery may be used for a small and portable electronic device, such as a smartphone, a feature phone, a laptop computer, a digital camera, and a camcorder, and a high-capacity secondary battery may be widely used as a motor-driving power supply, a power-storage battery, etc. of a hybrid vehicle, an electric vehicle, etc. The secondary battery may include an electrode assembly including a positive electrode and a negative electrode, a case accommodating the electrode assembly, an electrode terminal connected to the electrode assembly, etc.

The information described in the background of the present disclosure is merely disclosed for helping understand the background of the present disclosure and therefore it may contain information that does not constitute prior art.

Generally, a battery pack may be used as an energy storage system (ESS) or a device for storing energy of an electric vehicle (EV). Examples of the EV may include a hybrid vehicle (HEV), a plug-in hybrid vehicle (PHEV), a battery electric vehicle (BEV), etc.

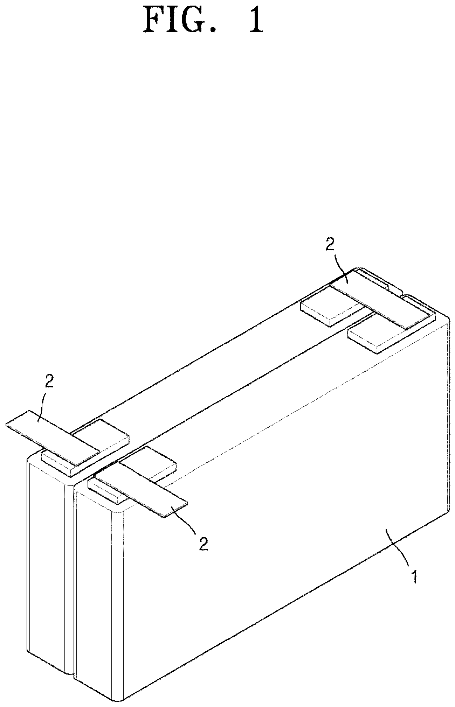

As illustrated in FIG. 1, a prismatic battery included in the battery pack may be formed of a can 1 having, in general, one polarity, a plurality of sealings, and a current collector. Also, the prismatic battery may include a plurality of bus bars 2 for connection between cells. However, a battery structure as described above, according to the related art, may have a disadvantage, namely, a large number of components included in one cell and high material costs and processing costs. Also, because a plurality of components is arranged in a limited space, a size of the dead space in the can may be relatively increased. These aspects are disadvantageous for increasing energy density of a battery.

### SUMMARY

The invention is defined by the appended claims. The description that follows is subjected to this limitation. Any disclosure lying outside the scope of said claims is only intended for illustrative as well as comparative purposes.

One or more embodiments include a battery pack in which a number of battery cells may be electrically connected to each other without a bus bar, by improving a can structure of a battery included in the battery pack.

However, the technical problem to be solved by the present disclosure is not limited to the task described above and various other tasks not described may be clearly understood by one of ordinary skill in the art from the description of the present disclosure as below.

Additional aspects will be set forth in part in the description which follows and, in part, will be apparent from the description, or may be learned by practice of the presented embodiments of the present disclosure.

According to one or more embodiments, a battery pack includes a number of battery cells pressurized toward each other, in direct contact with each other, and electrically connected to each other. The battery cells are arranged in a first direction and each of the battery cells has an inverse polarity with respect to an adjacent battery cell.

The battery cells may each include a first can and a second can having different polarities from each other in the first direction.

The first can and the second can may be made of a metallic material different from each other.

The first can may include or consist of aluminum, and the second can may include or consist of steel.

The first can may be in direct contact with a cooling member, and the second can may not be in direct contact with the cooling member.

The first can and the second can may be coupled to each other and insulated from each other with a sealing gasket between the first can and the second can.

The battery pack may also include a positive electrode member facing the first can may and a positive electrode material on a single surface of the positive electrode member.

The single surface of the positive electrode member may face away from the first can.

The battery cells may be prismatic cells.

### BRIEF DESCRIPTION OF THE DRAWINGS

The accompanying drawings in the present specification show embodiments and are illustrated to help further understand the technical concept of the present disclosure along with the detailed description of the present disclosure below. Therefore, the present disclosure shall not be interpreted as being defined only by the aspects illustrated in the drawings.

The above and other aspects, features, and advantages of certain embodiments of the present disclosure will be more apparent from the following description taken in conjunction with the accompanying drawings, in which:
FIG. 1 is a structural view of a battery pack according to the related art;
FIG. 2 is a view showing an exterior shape of a battery cell included in a battery pack according to embodiments of the present disclosure;
FIG. 3 is a cross-sectional view of the battery cell taken along line III-III of FIG. 2;
FIG. 4 is a structural view of a battery pack including two of the battery cells illustrated in FIG. 2;
FIG. 5 is a cross-sectional view of the battery pack taken along line V-V of FIG. 4; and
FIG. 6 is an enlarged view of a structure of region "A" illustrated in FIG. 5.

### DETAILED DESCRIPTION

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description. As used herein, the term "and/or" includes any and all combinations of one or more of the associated listed items. Expressions such as "at least one of," if preceding a list of elements, modify the entire list of elements and do not modify the individual elements of the list.

Hereinafter, embodiments will be described in detail with reference to the accompanying drawings. Before the description, a term or a word used in this specification and the claims shall not be interpreted to be limited by a common or a lexical meaning. Based on the principle that the inventor may appropriately define the concept of the term in a way best to describe the invention, the term or the word shall be interpreted as a meaning and a concept that is in compliance with the technical concept of the present disclosure. Thus, embodiments described in the specification and an element illustrated in the drawing are just part of embodiments and may not represent the entire technical concept of the present disclosure. Accordingly, it should be understood that there may be various equivalents and modified examples which may substitute the embodiment and the element, at the point of the present application. Also, if used in this specification, "comprise/include" and/or "comprising/including" may specify the presence of described shapes, numbers, steps, operations, members, elements, and/or groups thereof and may not exclude the presence or addition of one or more other shapes, numbers, steps, operations, members, elements, and/or groups thereof. Also, if describing embodiments, configurations described as "may" or "may be" may indicate "one or more embodiments."

Also, for helping understand the present disclosure, the accompanying drawings may be illustrated not as actual scales. Rather, sizes of some elements may be exaggerated. Also, the same reference numerals may be assigned to the same elements in different embodiments.

The description that two objects for comparison are "the same" as each other may denote that they are "substantially the same" as each other. Thus, the range of the expression "substantially the same" may include a case of having a deviation considered as a low degree, for example, a deviation within 5 %. Also, that a certain parameter is the same in a certain area may denote that the parameter is the same from an average perspective.

Although "first," "second," etc. are used to describe various elements, these elements are not limited by these terms. These terms are merely used to distinguish one element from another. Unless particularly described as the opposite, a first element may also be a second element.

Throughout the specification, unless particularly described otherwise, each element may be provided in a singular number or a multiple number.

That an arbitrary element is arranged "above (or under)" an element or "on (or below)" an element may denote not only that the arbitrary element may be arranged to be in contact with an upper surface (or a lower surface) of the element, but also that another element may be arranged between the element and the arbitrary element arranged on (or below) the element.

Also, if it is described that a certain element is "connected to," "coupled to," or "in contact with" another element, the elements may be directly connected to or in contact with each other, but it may also be interpreted that another element may be "arranged" between the elements or the elements may be "connected to," coupled to," or "in contact with" each other through another element. Also, if a part is referred to as being "electrically connected" to other parts, the part may be directly connected to the other parts or may be connected to the other parts with other devices therebetween.

Throughout the specification, "A and/or B" may denote A or B or A and B, unless particularly otherwise described. In this regard, "and/or" may include all combinations or arbitrary combinations of a plurality of listed items. "C to D" may denote C or greater to D or less, unless particularly otherwise described.

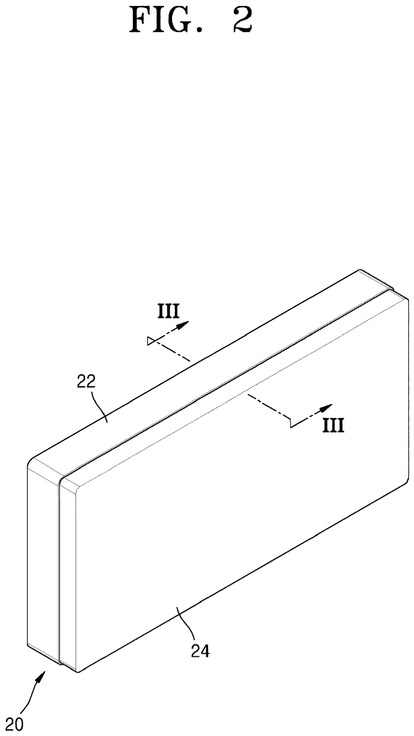

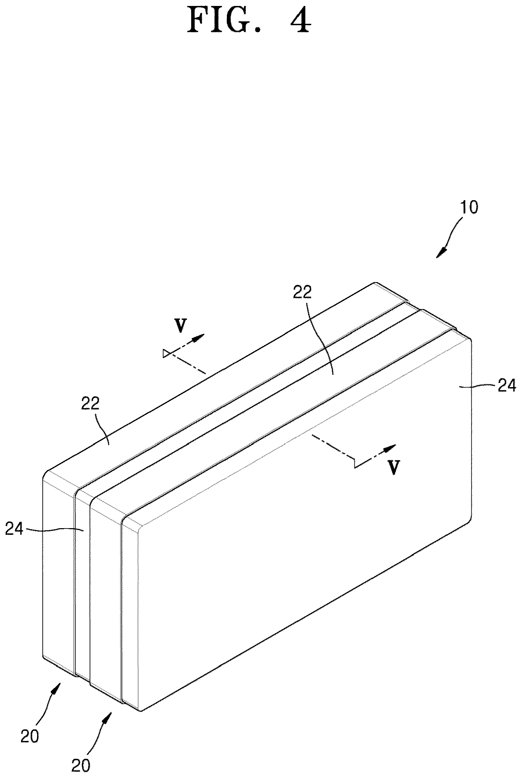

Referring to FIGS. 2 to 6, a battery pack 10 according to one embodiment of the present disclosure may include a battery cell 20, a first can 22, and a second can 24.

In one or more embodiments, the battery pack 10 includes a plurality of battery cells 20. The battery cell 20 may be, for example, a prismatic battery cell. The battery cell 20 may be accommodated in a pack housing in which an accommodation space is formed. The battery cells 20 are arranged in a first direction (X). The battery cells 20 are formed (or positioned) such that each of the battery cells 20 has an opposite polarity from each other in the battery pack 10. The battery cells 20 are pressurized to each other to be in direct contact with each other and are thus electrically connected to each other.

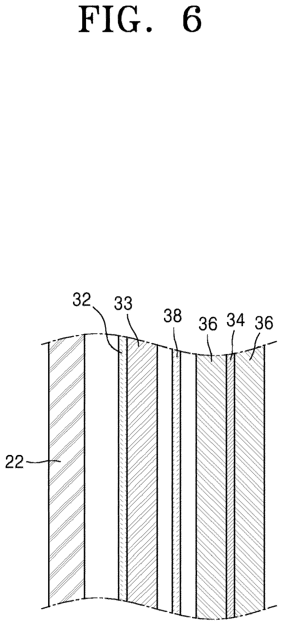

As illustrated in FIG. 6, in the battery cell 20, a positive material, a negative material, a separation layer 38, and an electrolyte may be formed in a case including the first can 22 and the second can 24. According to the present disclosure, the positive material, a negative material, and the separation layer 38 may be formed as a jelly roll 30. The positive material may include a positive electrode member 32 and a positive electrode material 33. The negative material may include a negative electrode member 34 and a negative electrode material 36. The separation layer 38 is between the positive electrode member 32 (and the positive electrode material 33 thereon) and the negative electrode member 34 (and the negative electrode material 36 thereon).

The first can 22 and the second can 24 have different polarities from each other in the first direction (X). The first can 22 may include aluminum. The second can 24 may include steel. The first can 22 and the second can 24 may be coupled to each other such that an open surface (i.e., an opening) of each of the first can 22 and the second can 24 faces each other. The first can 22 and the second can 24 may be coupled to each other and insulated from each other with a sealing gasket 65 therebetween. The sealing gasket 65 may also be formed as a band structure of a ring shape. The sealing gasket 65 may include an electrically insulating material. The sealing gasket 65 may include a flexible material. The sealing gasket 65 may be mounted to contact an inner peripheral or circumferential surface of the first can 22. The sealing gasket 65 may be mounted to contact an outer peripheral or circumferential surface of the second can 24. The battery cells 20 may include a first electrode and a second electrode including heterogeneous metals different from each other. The first can 22 may form the first electrode. The second can 24 may form the second electrode. The first electrode may be a positive (+) electrode. The second electrode may be a negative (-) electrode. The first can 22 may be electrically connected to a positive electrode current collector 40 of the jelly roll 30. The second can 24 may be electrically connected to a negative electrode current collector 50 of the jelly roll 30. The positive electrode current collector 40 and the second can 24 may be electrically insulated from each other by an insulating member 60. The negative electrode current collector 50 and the first can 22 may be electrically insulated from each other by the insulating member 60.

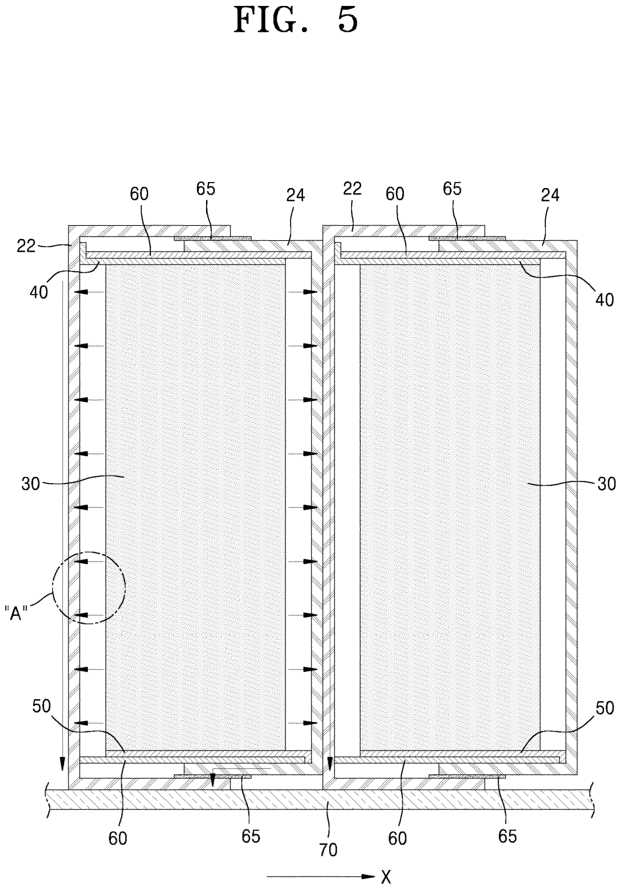

The first can 22 may be mounted to be in direct contact with a cooling member 70, as shown in FIG. 5. The second can 24 may be mounted not to be in direct contact with the cooling member 70 (e.g., the second can 24 may be separated by a gap from the cooling member 70). Heat generated in the battery cell 20 may be radiated through the cooling member 70 after being transmitted to the first can 22. If the heat generated in the battery cell 20 is transmitted to the second can 24, the heat may be radiated through the cooling member 70 through the first can 22. FIG. 5 illustrates a path (as indicated by the arrows) in which heat generated in the battery cell 20 is transmitted to the cooling member 70.

The first can 22 and the second can 24, which are pressurized to each other to be in contact with each other in the battery cells 20 arranged to be adjacent to each other, have different polarities from each other. Thus, the battery cells 20 included in the battery pack 10 according to the present disclosure is electrically connected in series.

As illustrated in FIG. 6, the positive electrode member 32 facing the first can 22 may have a structure in which the positive electrode material 33 is applied onto a single surface of the positive electrode member 32 (e.g., the positive electrode material 33 may be applied only to the surface of the positive electrode member 32 facing away from the first can 22). In one or more embodiments, there may be no positive electrode material 33 at a surface of the positive electrode member 32 facing the first can 22, and thus, an electrical short may not occur at an interface between the first can 22 and the positive electrode member 32. In this manner, an internal short of the battery cell 20 may be prevented.

Hereinafter, an operation effect of the battery pack 10 including the elements as described above will be described in detail by using an example of an assembling process of a battery pack.

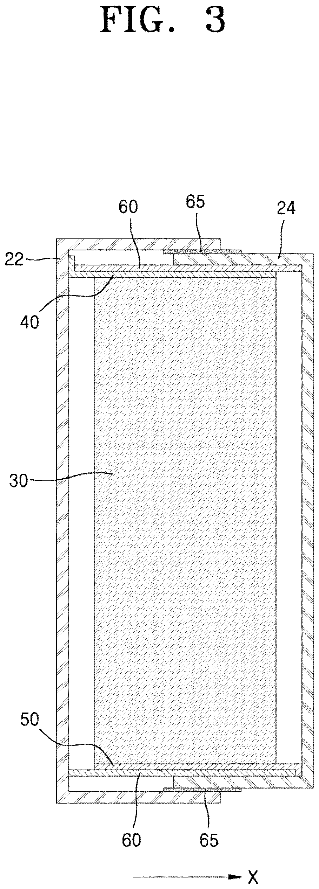

As illustrated in FIG. 3, the battery cell 20 according to one or more embodiments of the present disclosure includes the first can 22 and the second can 24 having different polarities from each other. Thus, in order to electrically connect the plurality of battery cells 20, the first can 22 and the second can 24 of the battery cells 20 adjacent to each other may only have to be stacked such that the first can 22 and the second can 24 are pressurized to be in contact with each other. Thus, a bus bar essentially typically utilized in the related art to form a battery pack may not be necessary. Thus, in the battery pack 10 according to the present disclosure, electrical connection between the battery cells 20 may be possible without a bus bar, and thus, the number of components may be reduced compared to a structure according to the related art. Accordingly, manufacturing costs may be decreased to reduce the cost price. Also, the battery cell 20 included in the battery pack 10 according to the present disclosure may not require a cap structure that is typically utilized in the related art, and thus, the structure may be simplified and the number of components may be reduced. Thus, the usability of the inner space of the battery cell 20 may be improved. As a result, the battery cell 20 may have increased energy density compared to the related art.

As described above, in the battery pack according to the present disclosure, each of the battery cells may be formed as a can having two polarities, and thus, a current collector of the battery cell may be directly connected to the can. Thus, the components may be simplified. Also, a current path may be formed through the can, and thus, a bus bar may not be required.

Also, according to the present disclosure, the material cost and the processing cost may be reduced, and the efficient utilization of the inner space of the can may be increased to improve energy density.

## Claims

1. A battery pack (10) comprising:
a plurality of battery cells (20) pressurized toward each other, in direct contact with each other, and electrically connected to each other,
wherein the battery cells (20) are arranged in a first direction (X), and
wherein each of the battery cells (20) has an inverse polarity with respect to an adjacent one of the battery cells (20).

2. The battery pack (10) as claimed in claim 1, wherein each of the battery cells (20) comprises a first can (22) and a second can (24) having different polarities from each other, and wherein the first can (22) and the second can (24) are arranged in the first direction (X).

3. The battery pack (10) as claimed in claim 2, wherein the first can (22) and the second can (24) are made of metallic material different from each other.

4. The battery pack (10) as claimed in claim 3, wherein the first can (22) comprises aluminum, and
wherein the second can (24) comprises steel.

5. The battery pack (10) as claimed in any one of claims 2-4, wherein the first can (22) is in direct contact with a cooling member (70), and
the second can (24) is not in direct contact with the cooling member (70).

6. The battery pack (10) as claimed in any one of claims 2-5, wherein the first can (22) and the second can (24) are coupled to each other and insulated from each other with a sealing gasket (65) between the first can (22) and the second can (24).

7. The battery pack (10) as claimed in any one of claims 2 - 6, wherein each of the battery cells (20) comprises a positive electrode member (32) facing the first can (22), and a positive electrode material (33) on a single surface of the positive electrode member (32).

8. The battery pack (10) as claimed in claim 7, wherein the single surface of the positive electrode member (32) faces away from the first can (22).

9. The battery pack (10) as claimed in one or more of the preceding claims, wherein the battery cells (20) are prismatic cells.

10. The battery pack (10) as claimed in one or more of the preceding claims, wherein the battery cells (20) are coupled together without a bus bar.
